(19) **Europäisches Patentamt**
**European Patent Office**
**Office européen des brevets**

(11) Numéro de publication: **0 083 522 B1**

(12) # FASCICULE DE BREVET EUROPEEN

(45) Date de publication du fascicule du brevet:
**19.02.86**

(51) Int. Cl.⁴: **C 08 G 12/32**, C 02 F 1/54

(21) Numéro de dépôt: **82402284.2**

(22) Date de dépôt: **14.12.82**

(54) **Procédé de préparation d'une résine aminoplaste cationique et son application dans le traitement des eaux.**

(30) Priorité: **29.12.81 FR 8124396**

(43) Date de publication de la demande:
**13.07.83 Bulletin 83/28**

(45) Mention de la délivrance du brevet:
**19.02.86 Bulletin 86/8**

(84) Etats contractants désignés:
**BE CH DE FR GB IT LI NL SE**

(56) Documents cités:
**FR - A - 2 257 548**
**FR - A - 2 424 234**
**GB - A - 831 986**
**US - A - 2 574 114**

**Le dossier contient des informations techniques présentées postérieurement au dépôt de la demande et ne figurant pas dans le présent fascicule.**

(73) Titulaire: **SOCIETE FRANCAISE HOECHST Société anonyme dite:, 3, avenue du Général de Gaulle, F-92800 Puteaux (FR)**

(72) Inventeur: **Cabestany, Jean, 127 Boulevard Maxime Gorki, F-93240 Stains (FR)**
Inventeur: **Trouve, Claude, 62 Boulevard de Port Royal, F-75005 Paris (FR)**

(74) Mandataire: **Rinuy, Santarelli et al, 14, avenue de la Grande Armée, F-75017 Paris (FR)**

## Description

La présente invention concerne un procédé de préparation d'une résine aminoplaste cationique et son application au traitement des eaux.

Les résines aminoplastes sont très connues et largement utilisées. Selon US-A-3377274, certaines résines aminoplastes cationiques telles que celles décrites dans US-A-2345543 et US-A-2485079 peuvent être utilisées dans la clarification des eaux peu chargées en matières en suspension. Ces résines sont des polymères hydrophiles mélamine-formaldéhyde ou mélamine-urée-formaldéhyde salifiés par un acide. Certaines résines de composition particulière telles celles décrites dans FR-A-2257548 présentent une efficacité supérieure.

Ces résines aminoplastes salifiées à base de mélamine ou de mélamine et d'urée et de formaldéhyde souffrent, en milieu aqueux acide, d'une stabilité médiocre qui devient nettement mauvaise dès que la température de stockage atteint les températures ambiantes habituelles régnant dans les régions tropicales ou équatoriales. Cette instabilité en milieu aqueux acide est bien connue et elle constitue aujourd'hui une des principales entraves à leur développement commercial. Diverses solutions ont été proposées pour remédier, plus ou moins partiellement à cet inconvénient majeur. Ainsi, US-A-4182839 propose d'effectuer une méthylation partielle des groupements méthylols d'une résine mélamine-formaldéhyde rendue cationique par condensation avec un dérivé aminé; mais si cette résine modifiée conserve une bonne efficacité dans l'amélioration de la résistance du papier à l'état humide, elle n'a par contre aucune action dans le traitement des eaux, comme les exemples comparatifs donnés ci-après le montreront.

Une autre solution enseignée par US-A-3645841 consiste à introduire du glyoxal ou à remplacer le formaldéhyde par du glyoxal. Ces résines aminotriazine-glyoxal ou aminotriazine-glyoxal-formaldéhyde obtenues dans des conditions de pH voisines de la neutralité ne peuvent pas être rendues dispersibles dans l'eau; mais quaternisées avec du diméthylsulfate elles acquièrent une bonne solubilité dans l'eau et deviennent de bons coagulants organiques pour les eaux peu chargées en matières en suspension ou en émulsion (cf. FR-A-2424234). Ces résines aminotriazine-glyoxal ou mélamine-glyoxal-formaldéhyde quaternisées sont stables dans le temps à la température de 20° C et constituent des coagulants efficaces.

On sait aussi que la condensation du formaldéhyde avec les groupements amino et/ou amido est catalysée aussi bien par les acides que par les bases. Toutefois, pour éviter des phénomènes de gélification du milieu de condensation, on conduit la condensation aldéhyde-dérivé azoté en milieu alcalin, puis lorsque la condensation est arrivée à un certain stade, on stoppe la condensation par refroidissement et dilution à l'eau. Lorsque le dérivé azoté est de la mélamine, et en réalisant cette dilution avec une eau acidifiée, on obtient généralement une résine sous forme cationique dispersible ou soluble dans cette solution aqueuse.

L'instabilité en milieu aqueux acide des résines conventionnelles mélamine-formaldéhyde cationique utilisées habituellement dans le traitement des eaux, qui se traduit très souvent sur le plan pratique par une prise en masse progressive de la résine est expliquée par la faculté que présentent les groupements méthylols de former des ponts méthylènes.

Or, la Demanderesse a découvert avec étonnement un procédé de préparation de résines aminoplastiques cationiques dispersibles dans l'eau et possédant d'excellentes propriétés applicatives dans le traitement des eaux associées à une stabilité dans le temps remarquable aussi bien à température ambiante qu'à des températures plus élevées voisines de 50° C. Ces nouvelles résines à base de mélamine-formaldéhyde-glyoxal sont salifiées par un acide minéral ou organique protonique ou par un mélange de ces acides, tel que l'acide chlorhydrique, l'acide orthophosphorique et l'acide formique. Si on désigne la mélamine par M, le formaldéhyde par F, le glyoxal par G et l'acide minéral ou organique par AH, la résine selon l'invention présente la composition molaire:

$$1\,M\,/\,0{,}1\text{–}3G\,/\,2\text{–}4\,F\,/\,0{,}5\text{–}1\,AH$$

A une mole de mélamine correspondent donc 0,1 à 3 moles de glyoxal, 2 à 4 moles de formaldéhyde et 0,5 à 1 mole d'acide minéral ou organique protonique ou la quantité équivalente d'un mélange de ces acides. Comme mentionné précédemment, les résines mélamine-formaldéhyde-glyoxal connues ne sont pas dispersibles en milieu aqueux acide par suite d'une hydrolyse acide qui se traduit par une baisse significative de la viscosité de ces résines (cf. US-A-3645841). Or, la Demanderesse a découvert avec surprise qu'en chauffant le mélange des réactifs dans les proportions molaires citées précédemment, elle obtient directement en un seul stade une résine selon l'invention, bien que la réaction soit effectuée en permanence à un pH acide compris entre 2 et 5.

La présente invention a donc aussi pour objet un procédé de préparation de ces résines.

Selon ce procédé, une résine selon l'invention est obtenue à pH acide, compris entre 2 et 5, avantageusement compris entre 3 et 3,5 et à une température de condensation inférieure à 100° C, avantageusement comprise entre 70 et 80° C, en mélangeant au départ tous les réactifs: la mélamine, le formaldéhyde, le glyoxal et l'acide minéral ou organique ou un mélange de ces acides dans une quantité d'eau telle que la concentration initiale des réactifs soit comprise entre 20 et 30% en poids, avantageusement comprise entre 20 et 25% en poids.

La réaction de condensation est suivie par analyse viscosimétrique du milieu réactionnel avec une tube viscosimétrique à écoulement de coefficient K' voisin de $1.10^{-3}$. Lorsque la viscosité du milieu réactionnel atteint la valeur de $35\pm5$ mPa.s

déterminée à 20° C sur une prise d'essai amenée à une concentration de 20% en poids, la condensation est arrêtée par refroidissement et dilution avec une quantité d'eau telle que la concentration finale en résine exprimée en g pour 100 g soit comprise entre 5 et 20, avantageusement comprise entre 10 et 15. Cette concentration finale en résine est déterminée par chauffage de 1 g d'échantillon durant 1 heure à 140° C.

Selon le procédé de l'invention, les réactifs sont des produits commerciaux techniques et les aldéhydes: formaldéhyde et glyoxal, sont utilisés en solution aqueuse tels qu'ils sont habituellement commercialisés. L'acide minéral ou organique protonique est généralement choisi parmi les acides suivants: acide chlorhydrique, acide orthophosphorique, acide formique technique, acide acétique pur, acide nitrique.

La vitesse réactionnelle est influencée par la concentration initiale des réactifs, le pH et la température. Une vitesse réactionnelle compatible avec une production industrielle économique est obtenue en mettant en œuvre le procédé selon l'invention à pH compris entre 3 et 3,5 avec une concentration initiale des réactifs de 20 à 25% en poids et à une température de 75–80° C.

La résine selon l'invention se présente sous forme d'une solution aqueuse opalescente, présentant un pH compris entre 2 et 5, un taux de glyoxal libre déterminé par polarographie inférieur ou égal à 0,1% en poids et une viscosité Brookfield déterminée avec un viscosimètre Brookfield, modèle RVT, à la vitesse de 100 tours par minute de 50±10 mPa.s.

La résine selon l'invention est stable au stockage aussi bien à la température ambiante qu'à 50±5° C. Cette stabilité à 50° C est supérieure à 3 mois. Si on suit l'évolution de la viscosité Brookfield de la résine selon l'invention en fonction du temps à diverses températures, on observe que cette viscosité est stable à la température ambiante et qu'elle n'est que très faiblement croissante à 50° C. Cette excellente stabilité en fonction du temps et de la température est probablement due à la présence du glyoxal dans la résine. En effet, on observe que la stabilité de la résine est d'autant meilleure que le taux de glyoxal engagé et combiné est plus élevé.

Il est connu d'utiliser des résines aminoplastes cationiques comme coagulants organiques pour des eaux peu chargées en matières en suspension, en émulsion ou en solution. FR-A-2 257 548 enseigne que les résultats les meilleurs sont obtenus dans le traitement des eaux avec des résines mélamine-formaldéhyde hydrosolubles lorsque certaines conditions sont remplies en ce qui concerne les quantités de formaldéhyde et d'acide utilisées. Toutefois, l'utilisation de ces résines particulières exige très souvent la détermination préalable du pH des eaux à traiter et, si nécessaire, leur ajustement à une valeur compatible avec le type de résine utilisée, ce qui présente l'inconvénient d'introduire dans les eaux à traiter des électrolytes qui peuvent s'avérer gênants lors de l'emploi de ces eaux. Les résines, selon la présente invention, en raison de leur excellente stabilité, ne nécessitent pas ces opérations laborieuses de détermination et d'adjustement du pH des eaux à traiter; elles présentent de surcroît, par rapport aux résines aminoplastes connues, une efficacité meilleure lors de leur utilisation avec certaines eaux telles que les eaux riches en sels minéraux dissous comme par exemple l'eau de mer. De plus, en mélange avec des coagulants minéraux classiques tels que le polychlorure d'aluminium, le chlorure ferrique, une résine selon l'invention développe un effet complémentaire. Une composition particulièrement intéressante peut être constituée par une proportion principale de la résine selon l'invention dans l'eau et par 0 à 20% en poids de chlorure ferrique. Elle peut aussi être utilisée en mélange avec des floculants organiques classiques tels que les copolymères dérivés de l'acrylamide.

La présente invention a donc aussi pour objet l'application des résines selon l'invention au traitement des eaux brutes et des eaux résiduaires et plus spécialement aux eaux brutes et résiduaires peu chargées en matières en suspension, en émulsion ou en solution.

Selon cette application, on peut faire varier la proportion de résine mélamine-formaldéhyde glyoxal salifiée en fonction des caractéristiques de la solution, de l'émulsion ou de la suspension à traiter ou de la nature ou des caractéristiques de la matière contenue dans celle-ci.

En général, la résine selon l'invention est utilisée à des doses exprimées en résine 100% comprises entre 1 et 500 ppm, de préférence 1 à 20 ppm pour les eaux brutes et 20 à 300 ppm pour les eaux résiduaires. Lorsque d'autres produits sont utilisés conjointement avec la résine selon l'invention, la proportion de résine peut être diminuée ou augmentée en fonction de la nature et de la quantité de ces autres produits.

Selon la présente invention, il est possible de précipiter ou de floculer rapidement non seulement les matières dispersées sous forme de suspension ou d'émulsion mais aussi certaines matières dissoutes dans les eaux à traiter. Du fait de son excellente stabilité, la résine selon l'invention peut être utilisée en association avec 0 à 20% en poids d'un acide minéral ou organique choisi parmi les acides chlorhydrique, nitrique, orthophosphorique, acétique et formique ou leurs mélanges. Une composition avantageuse pour le traitement de certaines eaux peut consister en une association d'une proportion principale d'une résine selon l'invention et une proportion comprise entre 0 et 20% en poids d'acide orthophosphorique.

Les exemples et exemples comparatifs ci-après décrivent la présente invention de manière plus précise. Ils sont donnés à titre illustratif et nullement limitatif de l'invention.

Exemple 1

On chauffe à 75–80° C, un mélange de:
— 201 g de glyoxal en solution aqueuse à 40 g % g,

- 318 g de formaldéhyde en solution aqueuse à 52,4 g % g,
- 175 g de mélamine cristallisée,
- 75 g d'acide chlorhydrique à 37 g % g,
- 1187 g d'eau déminéralisée.

On suit la condensation par analyse viscosimétrique à écoulement. Lorsqu'on atteint une viscosité de 35±5 mPa.s déterminée à 20° C et à une dilution de 20 g % g avec un viscosimètre du type Oswald de coefficient K' d'environ 0,001, on introduit:
- 1044 g d'eau déminéralisée

puis on refroidit rapidement le milieu réactionnel à 20° C.

On obtient ainsi 3 kg de résine de composition molaire M1 / G1 / F4 / HCl 0,55, présentant une viscosité déterminée à 20° C avec un viscosimètre Brookfield, modèle RVT, tournant à la vitesse de 100 tours par minute de 50±10 mPa.s. Cette résine possède un pH = 3, un taux de glyoxal libre de 0,1 g % g déterminé par polarographie, un extrait sec de 12,5±0,5 g % g réalisé par chauffage d'un échantillon de 1 g durant 1 h à 140° C et une cationicité de 1,6 méq/g.

Exemples 2 à 4

En opérant comme dans l'exemple 1, mais en remplaçant l'acide chlorhydrique par divers autres acides, on obtient les résines suivantes définies par leurs compositions molaires.
- M1 / G1 / F4 / HNO₃ 0,6
  Caractéristiques de la résine: pH = 3,15
  Viscosité Brookfield, V 100, 20° C = 34 mPa.s
  Cationicité: 1,73 méq/g
  Extrait sec (1 g/1 h/140° C): 12,3 g % g
- M1 / G1 / F4 / HCOOH 0,7
  Caractéristiques de la résine: pH = 3,5
  Viscosité Brookfield, V 100, 20° C = 29 mPa.s
  Cationicité: 1,44 méq/g
  Extrait sec (1 g/1 h/140° C): 7,3 g % g
- M1 / G1 / F4 / H₃PO₄ 0,8
  Caractéristiques de la résine: pH = 2,35
  Viscosité Brookfield, V 100, 20° C = 39 mPa.s
  Cationicité: 1,81 méq/g
  Extrait sec (1 g/1 h/140° C): 12,1 g % g

Exemple 5
Exemple comparatif

On prépare une résine A comme décrit dans l'exemple de US-A-4 182 839. Cette résine, de composition molaire M1 / F15 / TEA 0,75 / HCl 0,8, où l'abréviation TEA représente la triéthanolamine, présente un pH de 7,0, une cationicité de 0,83 méq/g et une viscosité Brookfield, V 100, déterminée à 20° C, de 57 mPa.s.

Exemple 6
Exemple comparatif

On chauffe à 70–75° C le mélange suivant:
- 45,82 g (0,363 mole) de mélamine,
- 81,82 g (1,36 mole) de formaldéhyde en solution aqueuse à 50 g % g,
- 35,86 g (0,363 mole) d'acide chlorhydrique concentré à 37 g % g,
- 503,17 g d'eau distillée.

Lorsque la viscosité du milieu réactionnel, déterminée avec un viscosimètre à écoulement, à 20° C, est voisine de 5 mPa.s, on refroidit rapidement le milieu réactionnel et on le dilue ensuite avec 333,33 g d'eau distillée. On obtient ainsi 1 kg de résine présentant un extrait sec de 7,72 g % g (après séchage durant 1 h à 140° C), un pH de 1,4, une viscosité Brookfield, déterminée à 20° C, à la vitesse de 100 tours par minute de 20 mPa.s et une cationicité mesurée de 2,30 méq/g. Cette résine possède la composition molaire suivante: M1 / F 3,75 / PCl 1.

Exemple 7

Une eau résiduaire possédant une demande chimique en oxygène, D.C.O., de 510 mg/l, déterminée selon la norme AFNOR NF T 90–101, est traitée avec diverses quantités soit de résine préparée selon l'exemple 1, soit de chlorure ferrique. Après introduction dans l'eau à traiter du coagulant en une seule fois, la suspension est agitée à 140 tours par minute pendant 3 min, puis on détermine la turbidité du surnageant après un repos de 20 min avec un turbidimètre commercial. La turbidité mesurée est exprimée en unités N.T.U. appelées aussi quelquefois unités JACKSON.

On obtient les résultats suivants en fonction de la dose de coagulant exprimée en ppm de produit sec.

| Dose en ppm | Turbidité du surnageant exprimée en unités N.T.U. | |
| --- | --- | --- |
| | Résine selon exemple 1 | Chlorure ferrique |
| 0 | 80 | 80 |
| 20 | 35 | |
| 30 | 17 | |
| 60 | 3 | |
| 80 | 1 | |
| 160 | 0,8 | |
| 200 | | 30 |
| 260 | | 20 |
| 340 | | 14 |
| 400 | | 10 |

On observe aussi que la grosseur des agrégats formés avec la résine selon l'exemple 1 est très supérieure à celle obtenue avec le chlorure ferrique.

Exemple 8

On détermine par des essais successifs la dose minimale de coagulant pour obtenir une turbidité de 10 NTU lors du traitement d'une suspension de silice de faible granulométrie (diamètre moyen 0,2 μm, SYTON W30, marque déposée, commercialisé par la Société MONSANTO) à 1,08 g/l (turbidité) de cette suspension après 5 mn d'agitation: 160 NTU) dans les conditions suivantes):
- préparation d'une solution aqueuse de coagulant par introduction de 10 cm³ de la résine telle quelle dans une fiole jaugée de 100 cm³ et complètement à 100 cm³ avec de l'eau potable,

— introduction de la dose de coagulant en une seule fois dans 500 cm³ de suspension test,
— agitation à 50 tours par minute pendant 3 min,
— repos ensuite pendant 30 mn,
— prélèvement avec précaution de 25 cm³ de surnageant et détermination de sa turbidité avec un turbidimètre commercial,
— construction de la courbe de turbidité en fonction de la dose de coagulant.

En opérant avec la résine préparée selon l'exemple 1, présentant un extrait sec de 12,5 g % g, on obtient les résultats suivants:

| Dose de coagulant | | Turbidité mesurée exprimée en NTU |
|---|---|---|
| exprimée en cm³ de la solution diluée | exprimée en ppm de résine sèche | |
| 2 | 50 | 30 |
| 2,25 | 56,2 | 17 |
| 2,5 | 62,5 | 9 |
| 2,75 | 68,7 | 9 |

Pour réduire la turbidité d'une suspension de silice de 160 NTU . à 10 NTU il faut 0,245 cm³ de résine préparée selon l'exemple 1 soit 61,2 ppm.

Exemple 9
Traitement d'eaux résiduaires de raffinerie contenant 230 ppm d'hydrocarbures.

On détermine la teneur en hydrocarbures résiduels exprimée en ppm, selon la norme AFNOR T 90–203, en fonction du temps exprimé en minutes, d'une solution aqueuse contenant 230 ppm d'hydrocarbures après introduction de 2,5 ppm exprimés en sec de résine selon l'exemple 1.

On obtient les résultats suivants à la température de 20° C.

| Temps en minutes | Teneur en hydrocarbures résiduels exprimée en ppm |
|---|---|
| 0 | 230 |
| 2,5 | 200 |
| 5 | 170 |
| 7,5 | 140 |
| 10 | 110 |
| 12,5 | 80 |
| 15 | 50 |
| 20 | 30 |

Exemple 10
Test de clarification d'une eau de mer synthétique.

On prépare une suspension type «eau de mer» en dispersant dans une eau de ville contenant 30 g/l de chlorure de sodium, 4 g/l de sulfate de sodium anhydre et 0,2 g/l de bicarbonate de sodium, 2,5 ppm de solice à faible granulométrie, diamètre moyen des particules: 0,2 μm (SYTON W30, marque déposée).

D'autre part, on prépare une solution acidifiée de résine en ajoutant 80 g d'acide orthophosphorique cristallisé à 98% à 1 litre de résine préparée selon l'exemple 1.

Un échantillon de cette suspension est traité avec 11,2 ppm de la solution ci-dessus, puis cet échantillon et un échantillon témoin non traité sont filtrés sur un filtre à sable à la vitesse de 5 m/h. On recueille les éluats correspondants par fraction de 200 cm³ puis on mesure la turbidité de chaque fraction avec un turbidimètre commercial.
On obtient les résultats suivants:

| Eluats recueillis | Turbidité des éluats exprimée en NTU | |
|---|---|---|
| | Essai | Essai témoin |
| 0– 200 | 0,71 | 0,95 |
| 200– 400 | 0,74 | 0,83 |
| 400– 600 | 0,34 | 0,81 |
| 600– 800 | 0,25 | 0,81 |
| 800–1000 | 0,20 | 0,81 |
| 1000–1200 | 0,17 | 0,81 |
| 1200–1400 | 0,16 | 0,81 |
| 1400–1600 | 0,13 | 0,81 |
| 1600–1800 | 0,12 | 0,81 |

Exemple 11
On prépare une émulsion aqueuse contenant 250 ppm d'huile résiduaire de raffinerie. Après un traitement durant 1 min avec un appareil ULTRA-TURAX (marque déposée), puis d'une agitation à 200 tours par minute pendant 1 min et à 45 tours par minute pendant 14 minutes, on traite divers échantillons de cette emulsion avec diverses doses de résines à tester. Puis, après 5 mn de flottation par de l'eau préssurisée, on mesure la turbidité des échantillons.
On obtient les résultats suivants:

| Dose de résine utilisée exprimée en ppm | Turbidité mesurée exprimée en NTU | | | | |
|---|---|---|---|---|---|
| | Résine selon exemple 1 | Résine selon exemple 2 | Résine selon exemple 3 | Résine selon exemple 4 | Résine selon exemple 5 |
| 0,5 | 65 | 65 | 65 | 65 | 65 |
| 1 | 40 | 40 | 36 | 42 | 67 |
| 2,5 | 14 | 14 | 10 | 14 | 86 |
| 5 | 7 | 7 | 4 | 8 | 92 |

Exemple 12
Test de filtration
On prépare une suspension contenant 20 g/l de chlorure de sodium, 5 ppm de silice de faible granulométrie, diamètre moyen des particules: 0,2 μm (SYTON W30, marque déposée), et 1 ppm de chlore.

Cette suspension présente un pH de 7,5 à 8.

Ce test consiste à évaluer l'efficacité d'un coagulant en mesurant le pourcentage d'élimination des particules de diamètre inférieur à 2 μm, après filtration à la vitesse de 50 m/h sur un filtre à sable de section 38,5 cm³ possédant une couche filtrante de 1 m remplie avec du sable de granulométrie moyenne de 0,75 mm. Le comptage des particules est réalisé avec un appareil COULTRONIC (marque déposée). Le nombre de particules par cm³ possédant un diamètre inférieur à 2 µm avant traitement et avant filtration est de $\overline{M}$ = 8600, σ = 6150 et après filtration $\overline{M}$ = 4050, σ = 3500.

On obtient les résultats suivants:

| Dose de résine utilisée en ppm | Pourcentage d'élimination des particules de diamètre inférieur à 2 µm | |
| --- | --- | --- |
| | Résine selon l'exemple 1 | Résine selon l'exemple 2 |
| 0,5 | | |
| 0,75 | 67% | < 40% |
| 1 | 93–95% | < 40% |
| 1,5 | 94–97% | < 40% |
| 2 | | < 40% |
| 3 | | < 40% |

Exemple 13

Pouvoir colmatant

On prépare une suspension contenant 20 g/l de chlorure de sodium, 2 ppm de silice de faible granulométrie, diamètre moyen des particules: 0,2 µm (SYTON W30, marque déposée) et 1 ppm de chlore. Cette suspension présente un pH de 7,5–8,0 et une turbidité de 1 NTU.

Ce test consiste à calculer le pouvoir colmatant d'un filtre MILLIPORE (marque déposée) 0,45 µm de 47 mm de diamètre à travers lequel est filtrée la suspension précédente traitée avec diverses doses du coagulant à tester. Pour ce faire, on chronomètre le passage de 500 cm³ de cette suspension traitée, sous une pression de 2,1 bars, soit Ti le temps initial mesuré exprimé en minutes, puis après une durée de fonctionnement de 15 min pendant lequel la suspension traitée est filtrée sur ce filtre, on chronomètre de nouveau le passage de 500 cm³ sous la même pression, soit Tg le temps mesuré exprimé en minutes. Le pouvoir colmatant à la pression de 2,1 bars est donné par l'équation.

$$P_{2,1} = 100 \, (1 - Ti/Tg)$$

et le Fouling Index, FI, est calculé par la relation

$$FI = P_{2,1} / T$$

où T représente le temps exprimé en minutes qui sépare la mesure des temps Ti et Tg, soit T = 15.

| Dose de résine utilisée exprimée en ppm | Fouling Index | |
| --- | --- | --- |
| | Résine selon exemple 1 | Résine selon exemple 6 |
| 0,5 | | non mesurable |
| 1 | 5,6 | non mesurable |
| 1 puis 0,5 | | 5,6 |

## Revendications

1. Procédé de préparation de résines aminoplastes cationiques dispersibles dans l'eau à base de mélamine, de formaldéhyde et de glyoxal caractérisé en ce que l'on fait réagir à chaud, à une température inférieure ou égale à 100° C, à pH acide, compris entre 2 et 5, l'ensemble des constituants de la résine dans les proportions molaires correspondant à 2 à 4 moles de formaldéhyde, 0,1 à 3 moles de glyoxal et 0,5 à 1 mole d'acide minéral ou organique ou la quantité équivalente d'un mélange de ces acides pour 1 mole de mélamine dans une masse d'eau telle que la concentration initiale en réactifs soit comprise entre 20 et 30 g pour 100 g et que lorsque la condensation est parvenue à un certain stade déterminée par une valeur de viscosité du milieu réactionnel de 35±5 mPa.s, déterminée sur un échantillon refroidit et dilué à 20 g pour 100 g, la réaction est arrêtée par refroidissement et dilution à l'eau.

2. Procédé selon la revendication 1, caractérisé par le fait que l'on fait réagir ensemble 1 mole de mélamine, 4 moles de formaldéhyde, 1 mole de glyoxal et 0,55 mole d'acide chlorhydrique.

3. Procédé selon la revendication 1, caractérisé par le fait que l'on fait réagir ensemble 1 mole de mélamine, 4 moles de formaldéhyde, 1 mole de glyoxal et 0,8 mole d'acide orthophosphorique.

4. Procédé selon l'une quelconque des revendications 1 à 3, caractérisé par le fait que l'acide minéral ou organique est choisi parmi les acides chlorhydrique, nitrique, orthophosphorique, acétique et formique.

5. Procédé selon l'une quelconque des revendications 1 à 4, caractérisé par le fait que la réaction de condensation est réalisée avantageusement à un pH compris entre 3 et 3,5.

6. Procédé selon l'une quelconque des revendications 1 à 5, caractérisé par le fait que la condensation est avantageusement mise en œuvre à une température comprise entre 75 et 80° C.

7. Application des résines obtenues par le procédé selon la revendication 1 au traitement des eaux brutes et des eaux résiduaires.

8. Application selon la revendication 7, caractérisée par le fait que les résines aminoplastes cationiques sont avantageusement utilisées pour le traitement des eaux brutes et des eaux résiduaires peu chargées en matières en suspension, en émulsion et/ou en solution.

9. Application selon la revendication 7, caractérisée par le fait que les résines aminoplastes cationiques sont utilisées au traitement d'eaux résiduaires chargées en sels minéraux telle l'eau de mer.

10. Application selon l'une quelconque des revendications 7 à 9, caractérisée par le fait que les résines aminoplastes cationiques sont utilisées conjointement avec un coagulant minéral ou un coagulant organique.

11. Application selon la revendication 10, caractérisée par le fait que le coagulant minéal est un coagulant à base de chlorure ferrique.

12. Application selon l'une quelconque des revendications 7 à 11, caractérisée par le fait que les résines aminoplastes cationiques sont utilisées pour des eaux brutes à des doses comprises entre 1 et 20 ppm.

13. Application selon l'une quelconque des revendications 7 à 11, caractérisée par le fait que les résines aminoplastes cationiques sont utilisées pour des eaux résiduaires à des doses comprises entre 20 et 500 ppm.

14. Application selon l'une quelconque des revendications 7 à 13, caractérisée par le fait qu'une composition coagulante aqueuse est mise en œuvre renfermant une proportion principale d'une résine obtenue par le procédé selon la revendication 1 et une proportion comprise entre 0 et 20% en poids d'un acide minéral ou organique choisi parmi les acides chlorhydrique, nitrique, orthosporique, acétique et formique ou d'un mélange de ces acides.

15. Application selon la revendication 14, caractérisée par le fait que l'acide est l'acide orthophosphorique.

16. Application selon l'une quelconque des revendications 7 à 13, caractérisée par le fait qu'elle renferme une proportion principale de résine selon l'une des revendications 1 à 3 et une proportion comprise entre 0 et 20% de chlorure ferrique.

**Pantentansprüche**

1. Verfahren zur Herstellung von in Wasser dispergierbaren, kationischen Aminoplastharzen auf Basis von Melamin, Formaldehyd und Glyoxal, dadurch gekennzeichnet, dass man in der Wärme bei einer Temperatur unterhalb von oder gleich 100° C im sauren pH-Bereich zwischen 2 und 5 die Gesamtheit der Bestandteile des Harzes in Molverhältnissen, welche 2 bis 4 Mol Formaldehyd, 0,1 bis 3 Mol Glyoxal und 0,5 bis 1 Mol an anorganischer oder organischer Säure oder der äquivalenten Menge einer Mischung dieser Säuren auf 1 Mol Melamin entspricht, in einer solchen Wassermenge reagieren lässt, dass die Anfangskonzentration an Reaktionsteilnehmern zwischen 20 und 30 g auf 100 g liegt, und dass die Reaktion, wenn die Kondensation in einem bestimmten Stadium angelangt ist, das durch einen Viskositätswert des Reaktionsmediums von 35±5 mPa.s, gemessen an einer abgekühlten und auf 20 g pro 100 g verdünnten Probe, bestimmt ist, durch Abkühlung und Verdünnung mit Wasser angehalten wird.

2. Verfahren nach Anspruch 1, dadurch gekennzeichnet, dass man die Gesamtheit von 1 Mol Melamin, 4 Mol Formaldehyd, 1 Mol Glyoxal und 0,55 Mol Chlorwasserstoffsäure miteinander reagieren lässt.

3. Verfahren nach Anspruch 1, dadurch gekennzeichnet, dass man die Gesamtheit von 1 Mol Melamin, 4 Mol Formaldehyd, 1 Mol Glyoxal und 0,8 Mol Orthophosphorsäure miteinander reagieren lässt.

4. Verfahren nach einem der Ansprüche 1 bis 3, dadurch gekennzeichnet, dass die anorganische oder organische Säure unter Chlorwasserstoffsäure, Salpetersäure, Orthophosphorsäure, Essigsäure und Ameisensäure ausgewählt wird.

5. Verfahren nach einem der Ansprüche 1 bis 4, dadurch gekennzeichnet, dass die Kondensationsreaktion vorteilhafterweise bei einem pH-Wert zwischen 3 und 3,5 durchgeführt wird.

6. Verfahren nach einem der Ansprüche 1 bis 5, dadurch gekennzeichnet, dass die Kondensation vorteilhafterweise bei einer Temperatur zwischen 75 und 80° C durchgeführt wird.

7. Anwendung der nach dem Verfahren nach Anspruch 1 erhaltenen Harze zur Behandlung von Rohwässern und Schmutzwässern.

8. Anwendung nach Anspruch 7, dadurch gekennzeichnet, dass die kationischen Aminoplastharze vorteilhafterweise zur Behandlung von Rohwässern und von Schmutzwässern, welche wenig mit suspendierten Materialien beladen sind, in Emulsion und/oder in Lösung verwendet werden.

9. Anwendung nach Anspruch 7, dadurch gekennzeichnet, dass die kationischen Aminoplastharze zur Behandlung von Schmutzwässern, welche mit Mineralsalzen beladen sind, wie Meerwasser, verwendet werden.

10. Anwendung nach einem der Ansprüche 7 bis 9, dadurch gekennzeichnet, dass die kationischen Aminoplastharze zusammen mit einem anorganischen (mineralischen) Koagulierungsmittel oder einem organischen Koagulierungsmittel verwendet werden.

11. Anwendung nach Anspruch 10, dadurch gekennzeichnet, dass das anorganische (mineralische) Koaguliermittel ein Koaguliermittel auf Basis von Eisen(III)-chlorid ist.

12. Anwendung nach einem der Ansprüche 7 bis 11, dadurch gekennzeichnet, dass die kationischen Aminoplastharze für Rohwässer in Dosierungsmengen zwischen 1 und 20 ppm verwendet werden.

13. Anwendung nach einem der Ansprüche 7 bis 11, dadurch gekennzeichnet, dass die kationischen Aminoplastharze für Schmutzwässer in Dosierungsmengen zwischen 20 und 500 ppm verwendet werden.

14. Anwendung nach einem der Ansprüche 7 bis 13, dadurch gekennzeichnet, dass eine wässrige Koagulierzusammensetzung eingesetzt wird, welche einen Hauptanteil eines nach dem Verfahren nach Anspruch 1 erhaltenen Harzes und einen Anteil zwischen 0 und 20 Gew.-% einer anorganischen oder organischen Säure, ausgewählt unter Chlorwasserstoffsäure, Salpetersäure, Orthophosphorsäure, Essigsäure und Ameisensäure, oder einer Mischung dieser Säuren, einschliesst.

15. Anwendung nach Anspruch 14, dadurch gekennzeichnet, dass die Säure Orthophosphorsäure ist.

16. Anwendung nach einem der Ansprüche 7 bis 13, dadurch gekennzeichnet, dass sie einen Hauptanteil des Harzes nach einem der Ansprüche 1 bis 3 und einen zwischen 0 und 20% liegenden Anteil von Eisen(III)-chlorid einschliesst.

**Claims**

1. A process for preparation of aminoplast cationic resins dispersible in water and based on melamine, formaldehyde and glyoxal, characterized by hot reacting at a temperature lower than or equal to 100° C at an acid pH comprised between 2 and 5, all the constituents of the resin in molar proportions corresponding to 2 to 4 moles of formaldehyde, 0.1 to 3 moles of glyoxal and 0.5 to 1 mole of mineral or organic acid, or the equivalent quantity of a mixture of such acids for one mole of melamine in a quantity of water such that the initial concentration of reactives is comprised between 20 and 30 g for 100 g, and when the condensation reached a certain level giving a viscosity value of the reaction medium of $35 \pm 5$ mPa.s determined on a cooled sample diluted to 20 g for 100 g, the reaction is stopped by cooling down and water dilution.

2. A process according to claim 1, characterized by reacting together one mole of melamine, 4 moles of formaldehyde, one mole of glyoxal and 0.55 mole of hydrochlorid acid.

3. A process according to claim 1, characterized by reacting together one mole of melamine, 4 moles of formaldehyde, one mole of glyoxal and 0.8 mole of orthophosphoric acid.

4. A process according to any one of claims 1 to 3, characterized by selecting the mineral or organic acid form hydrochloric, nitric, orthophosphoric, acetic and formic acids.

5. A process according to any one of claims 1 to 4, characterized by realizing the condensation reaction advantageously at a pH comprised between 3 and 3.5.

6. A process according to any one of claims 1 to 5, characterized by carrying out the condensation advantageously at a temperature comprised between 75 and 80° C.

7. The application of the resins obtained by the process according to claim 1 to the treatment of raw waters and residual waters.

8. An application according to claim 7, characterized by using the cationic aminoplast resins advantageously for treating raw waters and residual waters little loaded with materials in suspension, emulsion and/or solution.

9. An application according to claim 7, characterized by using the cationic aminoplast resins for treating residual waters loaded with mineral salts such as sea water.

10. An application according to any one of claims 7 to 9, characterized by using the cationic aminoplast resins together with a mineral coagulant or an organic coagulant.

11. An application according to claim 10, characterized in that the mineral coagulant is a coagulant based on ferric chloride.

12. An application according to any of claims 7 to 11, characterized by using the cationic aminoplast resins for raw waters at doses comprised between 1 and 20 ppm.

13. An application according to any one of claims 7 to 11, characterized by using the cationic aminoplast resins for residual waters at doses comprised between 20 and 500 ppm.

14. An application according to any one of claims 7 to 13, characterized by utilizing an aqueous coagulant composition comprising a major proportion of a resin obtained by the process according to claim 1, and a proportion comprised between 0 and 20% by weight of a mineral or organic acid selected from hydrochloric, nitric, orthophosphoric, acetic and formic acids, or a mixture of such acids.

15. An application according to claim 14, characterized in that the acid is orthophosphoric acid.

16. An application according to any one of claims 7 to 13, characterized in that it includes a major proportion of resin according to one of claims 1 to 3 and a proportion comprised between 0 and 20% of ferric chloride.